# EUROPÄISCHE PATENTANMELDUNG

(11) **EP 4 300 240 A1**
(43) Veröffentlichungstag der Anmeldung: **03.01.2024**
(21) Anmeldenummer: 22182190.3
(22) Anmeldetag: 30.06.2022
(51) Int. Cl.: G05D 1/02

(54) **VERFAHREN ZUM STEUERN EINES AUTONOMEN FAHRZEUGS ZU EINEM ZIELOBJEKT, COMPUTERPROGRAMMPRODUKT UND VORRICHTUNG**

(71) Anmelder: Siemens Aktiengesellschaft, 80333 München (DE)
(72) Erfinder: Hadwiger, Simon, 90461 Nürnberg (DE); Lavrik, Vladimir, 63303 Dreieich (DE)
(74) Vertreter: Siemens Patent Attorneys

(57) **Zusammenfassung**

Autonome Fahrzeuge (englisch Automated Guided Vehicle, AGV) sind flurgebundene Fördermittel mit eigenem Fahrantrieb, die automatisch gesteuert und berührungslos geführt werden und dienen momentan in der Regel dem Materialtransport.

Die Erfindung betrifft eine Methode, die es ermöglicht, die Routine der Aufnahme eines Transportbehälters zu automatisieren d durch einen Kontrollmechanismus, der auf Methoden des maschinellen Lernens basiert. Die Erfindung betrifft weiterhin ein Computerprogramm und eine Vorrichtung.

## Beschreibung

Autonome Fahrzeuge (englisch Automated Guided Vehicle, AGV) sind flurgebundene Fördermittel mit eigenem Fahrantrieb, die automatisch gesteuert und berührungslos geführt werden. Diese Fahrzeuge dienen momentan in der Regel dem Materialtransport, zum Ziehen oder Tragen von Fördergut mit aktiven oder passiven Lastaufnahmemitteln. Zu Beginn wurden diese Fahrzeuge nur auf festgelegten Strecken geleitet, beispielsweise mit am Boden verlegten Führungsleitungen. Inzwischen sind die Führungen, zumindest in strukturierten Umgebungen, deutlich flexibler geworden. Eine zusätzliche Herausforderung ist die mögliche Interaktion mit Personen, die sich ebenfalls in der Umgebung aufhalten und bewegen können sollen. Es sind daher erhöhte Sicherheitsanforderungen an den Steuermechanismus des Fahrzeugs zu stellen.

Die Einsatzgebiete für Fahrerlose Transportsysteme sind so vielfältig wie die Transportaufgaben in der Industrie; es gibt prinzipiell keine Ausführungsbegrenzungen bezüglich des Gewichts des zu transportierenden Gutes und der zu überwindenden Distanz.

Prinzipiell ist der Einsatz solcher Fahrzeuge aber nicht beschränkt auf Waren, auch beispielsweise in Krankenhäusern oder in der Gastronomie werden AGV teilweise bereits eingesetzt.

In Produktions- und Distributionsbetrieben gibt es seit vielen Jahren die Forderung nach kurzen Durchlaufzeiten, geringen Beständen und hoher Flexibilität. Im Bereich der technisch-operativen Logistik sind es die Prozesse und Betriebsmittel des innerbetrieblichen Materialflusses, die geeignet gestaltet werden müssen. Ein wichtiger Prozess im Materialfluss ist das Transportieren, also die zielgerichtete Ortsveränderung von Gütern. Ein Betriebsmittel das hierzu wegen seiner universellen Verwendungsmöglichkeiten in nahezu allen Unternehmen eingesetzt wird, ist der konventionelle Gabelstapler.

Ein sehr wichtiges Kriterium ist dabei die Flexibilität, das heißt die leichte Anpassungsfähigkeit eines Transportsystems an veränderte äußere Verhältnisse. Ein Fahrerloses Transportsystem ist eine von zahlreichen Möglichkeiten, den Transportprozess zu automatisieren, bietet allerdings im Vergleich mit allen anderen Techniken den Vorteil der größten Flexibilität. Es sind bereits Verfahren bekannt, bei denen zunächst der Ziel-Ladungsträger identifiziert und seine Lage (Pose = Position und Orientierung) in einem globalen oder lokalen Koordinatensystem geschätzt wird. Frühere Arbeiten schätzten die Position des Lastenträgers anhand von Tiefeninformationen aus der Lichterkennung und Entfernungsmessung (LiDAR Sensoren), RGB-D (Farbe und Tiefe) Kameras oder sie benötigen bekannte Merkmale in der Umgebung. Im zweiten Schritt wird dann eine Trajektorie zur geschätzten Pose berechnet und ausgeführt.

Es sind verschiedene Ladungsträger bekannt, welche zur Aufnahme des zu transportierenden Gutes geeignet und weit verbreitet sind: Europalette, US-Palette, Gitterboxen, usw.

Die ordnungsgemäße Handhabung dieser Ladungsträger ist in vielen Logistikzentren ein entscheidender Bestandteil des Arbeitsablaufs.

Derzeit werden diese Ladungsträger mit Gabelstaplern gehandhabt, die in der Regel von Personal eines Logistikzentrums betrieben werden. Diese Aufgabe wird ständig ausgeführt und erfordert von den Staplerfahrern einen hohen Einsatz.

Bei der Handhabung von Ladungsträgern gibt es mehrere Ansätze.

Bekannt ist, wie bereits erwähnt, der Einsatz eines Gabelstaplerfahrers, um die Aufgaben zu erfüllen.

Es gibt bereits einige automatisierte Lösungen auf dem Markt, die die genannten Aufgaben übernehmen, beispielsweise von der Firma Agilox oder Thirdwave.

Die bekannten Lösungen bieten bereits
- die Automatische Annäherung an einen Ladungsträger und
- das Automatisches Einsetzen der Gabelstaplerzinken.

Allerdings weisen diese Lösungen auch Nachteile auf:
- Ladungsträger werden an vordefinierten Stellen positioniert, das bedeutet diese Lösungen benötigen die genaue Pose eines Ladungsträgers
- Man muss teure Berechnungen zur Deep Learning-basierten Pose-Schätzung durchführen.
- Dafür muss man die Posenschätzung mit klassischen Algorithmen durchführen (ArUco markerbasierte Posenschätzung Markerbasierte Pose-Schätzung, Template Matching, etc.).
- Die Navigation wird dann meist mit klassischen Steuerungsalgorithmen durchgeführt (optimale Steuerung, Kalman-Filterbasierte Steuerung, PID-Steuerung usw.).
Die meisten der bis heute bekannten Lösungen benötigen viele komplexe Berechnungen in einer im Voraus bekannten Umgebung.

Es ist Aufgabe der Erfindung, ein vereinfachtes und flexibles Verfahren anzubieten, zur Steuerung eines Autonomen Fahrzeugs zu einem Zielobjekt.

Die Aufgabe wird gelöst durch ein Verfahren umfassend die Merkmale des unabhängigen Patentanspruchs 1.

Die Aufgabe wird weiterhin gelöst durch ein Computerprogrammprodukt umfassend die Merkmale des unabhängigen Patentanspruchs 9.

Die Aufgabe wird ebenfalls gelöst durch eine Vorrichtung gemäß den Merkmalen des unabhängigen Patentanspruchs 10.

Im Folgenden wird eine Methode vorgeschlagen, die es ermöglicht, die Routine der Aufnahme eines Transportbehälters zu automatisieren d durch einen Kontrollmechanismus, der auf Methoden des maschinellen Lernens basiert.

Die Tätigkeit des Transports wird allgemein unterteilt in folgende Teilaufgaben:
1) (Definieren und) Lokalisieren eines Ladungsträgers,
2) Automatisches Anfahren des zufällig positionierten Ladungsträgers mit einem Steuerungsalgorithmus, basierend auf KI,
3) Positionieren der Aufnahmemittel (z. B. Einführen der Zinken des Gabelstaplers) in die Aufnahmevorrichtung eines Ladungsträgers (z. B. die Aufnahmelöcher in der Euro-Palette),
4) Anheben des Ladungsträgers, und
5) Verbringen des Ladungsträgers zu einem endgültigen Standort.

Im Weiteren werden wir uns nur die Ausführung der Schritte 1 und 2, später noch Schritt 3, genauer ansehen.

Das erfindungsgemäße Verfahren zum Steuern eines autonomen Fahrzeugs zu einem Zielobjekt weist folgende Schritte auf:
a. Erkennen eines Zielobjekt mit einem optischen Sensor,
b. Ermitteln eines ersten Hüllkörpers zu dem Zielobjekt,
c. Ermitteln erster Koordinaten x1, y1, f1 für den ersten Hüllköper,
d. Ermitteln eines zweiten Hüllkörpers zu dem Zielobjekt,
e. Ermitteln zweiter Koordinaten x2, y2, f2 für den zweiten Hüllkörper,
f. Ermitteln dritter Koordinaten x3, Richtung und x4, Geschwindigkeit des autonomen Fahrzeugs angeben,
g. Berechnen von Steuerbefehlen für das autonome Fahrzeug mit Hilfe eines Maschinenlernverfahrens,
h. Übermitteln der Steuerbefehle an das autonome Fahrzeug,
i. Wiederhole Schritt a bis h, bis das Zielobjekt erreicht ist.

Für den Hüllkörper werden folgende drei Werte ermittelt:
x und y definieren die Position des Zentrums des Hüllkörpers, und
f ist die Fläche des Hüllkörpers.

Weitere vorteilhafte Ausgestaltungen der Erfindung sind in den Unteransprüchen dargestellt.

Das Zielobjekt, zu welchem die autonome Einheit gesteuert werden soll, ist vorteilhafterweise eine Trägervorrichtung zur Aufnahme und den Transport von Waren. Diese Trägervorrichtungen sind üblicherweise standardisiert, so dass die Erkennung und Verarbeitung der erfassten Bilddaten sehr einfach möglich ist. Durch eine geeignete Erkennung können aber auch nicht standardisierte Trägervorrichtungen verwendet und erkannt werden.

Der erste ermittelte Hüllkörper umfasst vorteilhafterweise den Umfang des Zielobjekts, und der zweite ermittelte Hüllkörper beschreibt den Umfang von im Zielobjekt für den Transport vorgesehenen Mitteln. Hier sind bei dem Beispiel der Euro-Palette oder auch der Transport-Gitterbox die jeweils für die Aufnahme der Gabeln eines Gabelstaplers (oder ähnlichen Transportgeräts) bereits vorgesehenen Hohlräume zu nennen.

Die Erfassung des Zielobjekts geschieht in einer weiteren Ausgestaltungsform durch einen einfachen optischen Sensor, der jeweils (2D)-Bilder erzeugt, aufgenommen beispielsweise von einer monokularen Kamera, https://de.wikipedia.org/wiki/Monokular , welche wiederum - Infrarot Bilder einer Infrarot-Kamera, oder
- Bilder von einer RGB-Kamera, oder
- Bilder von einer Graustufenkamera umfasst.

Zum Berechnen von Steuerbefehlen für das autonome Fahrzeug wird vorteilhafterweise ein Maschinenlernverfahren verwendet. Hierbei ist ein verstärkendes Lernverfahren, auch Reinforcement Learning genannt, besonders vorteilhaft. Die Höhe der Belohnung wird dabei in einer Ausführungsform der Erfindung wiederholend anhand des jeweiligen, zu dem Zeitpunkt herrschenden / gemessenen Abstands zwischen dem autonomen Fahrzeug und dem Zielobjekt errechnet. In einer anderen Ausführungsform wird die Belohnung direkt anhand der vorhandenen Informationen berechnet (x, y, f Koordinaten der zwei Hüllkörper). Andernfalls müsste in der Realität für die Messung des Abstands ein Messverfahren/ Messaufbau verwendet werden.

Das Maschinenlernverfahren kann auch mit einem sogenannten Deep Neural Network kombiniert werden, zu einem sogenannten Deep Reinforcement Learning. Vorteilhaft wird dazu ein offpolicy Algorithmus wie beispielsweise Soft-Actor-Critic (SAC) Deep Reinforcement Learning verwendet.

Ein zentrales Merkmal von SAC ist die Entropie-Regularisierung. Die Strategie wird so trainiert, dass ein Kompromiss zwischen erwarteter Belohnung und Entropie, einem Maß für die Zufälligkeit der Strategie, maximiert wird. Dies steht in engem Zusammenhang mit dem Kompromiss zwischen Erkundung und Ausbeutung: Eine höhere Entropie führt zu mehr Erkundung, was das spätere Lernen beschleunigen kann. Sie kann auch verhindern, dass die Strategie vorzeitig zu einem schlechten lokalen Optimum konvergiert.

In einem weiteren Ausführungsbeispiel ist das verstärkende Lernverfahren, Reinforcement Learning, während der Ausführung des Verfahrens nachtrainierbar. Dabei kann sich das autonome Fahrzeug auf neue Gegebenheiten einstellen, beispielsweise auf einen Wechsel des Transportträgers oder eine veränderte Umgebung wie dem Lagerraum.

Nach Erreichung des Zielobjekts wird dann abschließend das Zielobjekt durch die am autonomen Transportfahrzeug angebrachten, für den zum Transport vorgesehenen Mitteln aufgenommen. Dafür wird das autonome Fahrzeug beispielsweise vorher auf die richtige Seite des Zielobjekts manövrieren um dann die Gabel des Gabelstaplers in die dafür vorgesehenen Aufnahmeöffnungen (im richtigen Winkel und weit genug) einzuführen

Wenn zumindest zwei gleichartige Zielobjekte erkannt wurden, so kann jedes Zielobjekt durch zumindest ein weiteres eindeutiges Merkmal unterscheidbar gekennzeichnet werden, und durch geeigneten Filter von dem autonomen Fahrzeug erkannt werden können. Hierfür können sowohl optische Merkmale (QR Code, Zifferncode, Barcode, ...) oder auch andersartige Markierungen (RFID, ...) verwendet werden, welche auch aus einer mittleren Entfernung noch sicher ausgewertet werden können.

Das weitere Merkmal ist beispielsweise nicht erforderlich, wenn nur gleichartige (weil leere) Paletten gesehen werden, und keine Unterscheidung getroffen werden muss. Bei der Aufgabe: "Hole eine leere Palette" ist es egal, welche der ermittelten Paletten genommen wird. Hier könnte dann beispielsweise die leichter zu erreichende Palette angefahren werden. Diese Entscheidung liegt beim Detektor bspw. durch ein Kriterium, welche Palette ist näher.

Es ist ein wesentlicher Vorteil der vorgestellten Methode, dass insgesamt nur die Daten eines einfachen optischen Sensors benötigt werden, welche in nicht-naheliegender Weise geschickt ausgewertet werden, um den Steuerungsmechanismus auszuführen. Diese Sensoren sind in dem AGV sowieso verbaut, was sich günstig auf die Kosten auswirkt.

Ein weiterer Vorteil der vorgeschlagenen Methode ist, dass sie zusätzlich zu anderen Bahnplanungslösungen verwendet werden kann, wie z. B. das Advanced Navigation System, ANS. Die erfindungsgemäße Methode benötigt ein einfaches optisches Sensorsystem (z. B. eine RGB-Kamera) und ist in der Lage, vordefinierte Ladungsträger (Paletten, Gitterboxen, ...) von beliebigen Positionen aus anzufahren, basierend auf einer maschinell lernenden Fahrzeugsteuerung und verdichteten visuellen Informationen unter Verwendung eines Bounding-Box-Erkennungsergebnisses (sogenannte Hüllkörper).

Die Erfindung wird auch in den Figuren näher erläutert. Dabei zeigt
- Figur 1: ein beispielhaftes Szenario eines Raumes mit Transportstrecken,
- Figur 2: eine Systemarchitektur,
- Figur 3: die Visualisierung kondensierter optischer Information mit Hüllkörper,
- Figur 4: ein beispielhafter Informationsfluß des Verfahrens,
- Figur 5: ein entsprechendes Verfahren nach dem Stand der Technik.

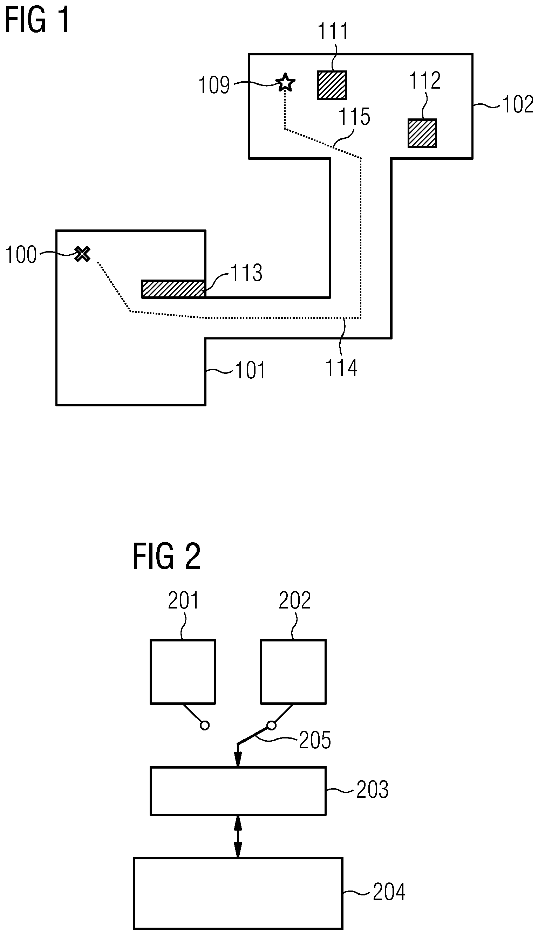

Die Figur 1 zeigt eine schematische Darstellung einer möglichen Architektur mit unserer vorgeschlagenen Methode (Optische Nahfeldnavigation).

Es ist ein mögliches Anwendungsszenario dargestellt mit verschiedenen Controllern, die in verschiedenen Zonen eingesetzt werden. Der abzufahrende Raum 101, 102 ist teilweise verwinkelt und mit mehreren Hindernissen 111, 112, 113, ausgestattet, welche zu umfahren sind und teilweise auch den Sichtkontakt des autonomen Fahrzeugs auf das Zielobjekt verhindern. Vom Ausgangspunkt 100 soll das autonome Fahrzeug zum Zielobjekt auf dem Zielpunkt 109 gesteuert werden. Dabei kann auch ein Teil der Strecke 114 mit klassischer Pfadplanungs-Navigation überwunden werden, sobald das autonome Fahrzeug dann in Sichtkontakt zum Zielobjekt kommt, wird die Navigation auf das neuartige Steuerverfahren umgeschaltet, 115.

Figur 2 zeigt eine Systemarchitektur mit klassischem Bahnplaner und der von uns vorgeschlagenen Methode.

Wie auch in Figur 1 dargestellt, ist das Zusammenspiel zwischen dem Bahnplanungssystem 201 (in diesem Beispiel: Advanced Navigation System, ANS) und der neuartigen Methode 202 (Optische Nahfeldnavigation - ONN) funktioniert dabei wie folgt:
Der Bahnplaner 201 (einschließlich der Steuerung des Fahrzeugs) wird verwendet, um das Fahrzeug von seiner aktuellen Position zu einer ersten Endposition zu navigieren. Dabei ist die erste Endposition keine feste Position des anzufahrenden Ladungsträgers, sondern eine Position in einem Bereich, in dem sich der Ladungsträger befinden könnte. Der Bereich kann unterschiedliche Abmessungen haben. Optimalerweise besteht in dem Bereich bereits Sichtkontakt zu dem Zielobjekt.

Wie in Figur 2 weiter gezeigt, wird die Fahrzeugsteuerung 203 nach Erreichen des Zielgebiets von der klassischen Bahnplanung auf unser Verfahren umgestellt, 205. Ausgabe ist üblicherweise ein Geschwindigkeitsvektor. Der Geschwindigkeitsvektor wird über einen Umschalter 205 an die Fahrzeugsteuerung 203 geleitet z. B. eine SPS. Die SPS hat intern die Fahrzeugkinematik gespeichert und kalkuliert dann die richtigen Steuergrößen für unterschiedliche Aktoren im Fahrzeug 204, z.B. Motoren für die Räder oder Lenkung.
Dann basiert die Fahrzeugsteuerung auf dem neuartigen Verfahren 202. Das Ziel ist es, das Fahrzeug zum Ladungsträger zu navigieren und die Gabeln 204 einzusetzen.

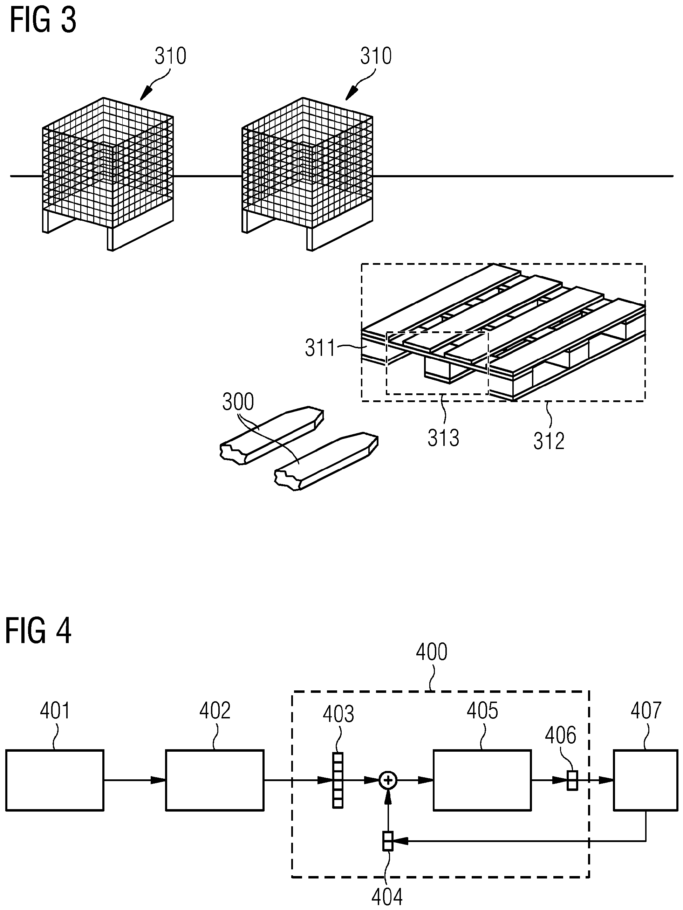

Im Gegensatz zu bereits bekannten Lösungen muss das autonome Fahrzeug bzw. dessen Steuerung bei dem neuartigen Verfahren die Pose (also Position und Ausrichtung) des Ladungsträgers nicht geschätzt werden, sondern kann sich auf der Grundlage verdichteter visueller Informationen (bspw. einer RGB-Kamera) nähern. Das bedeutet, anstatt das komplette Bild als Eingabe für die auf maschinellem Lernen basierende Fahrzeugsteuerung zu liefern, wird nur ein Erkennungsergebnis (Hüllkörper, sogenannte Bounding Boxes, siehe Figur 3) an das Neuronale Netz des maschinellen Lernverfahrens geliefert. Daher sind die Trainings unseres maschinell lernenden Steuergeräts aufgrund der geringeren Netzwerkgröße des neuronalen Netzes drastisch reduziert.

Die geringere Netzwerkgröße hat außerdem den Vorteil, dass weniger Ressourcen verbraucht werden, was den Controller auch auf IPCs mit geringer Rechenleistung oder auf eingebetteten Systemen lauffähig hält.

Wie bereits zuvor erwähnt wird die Belohnungsfunktion direkt auf den zur Verfügung stehenden verdichteten visuellen Informationen berechnet. Die Belohnungsfunktion wird verwendet, um den Lernprozess des Reinforcement Learning Agenten zu steuern. Für das Anfahren des Ladungsträgers müssen folgende Kriterien optimiert werden.
1. Die Fläche des inneren Hüllkörpers f2 soll vergrößert werden. Dies entspricht einer Annäherung an den Ladungsträger.
2. Das Zentrum des inneren Hüllkörpers x2 soll sich in der Mitte des Bildes befinden. Dies entspricht einer Verringerung des lateralen Offsets zwischen dem Ladungsträger und des autonomen Fahrzeugs.
3. Das Zentrum des inneren Hüllkörpers x2 soll gleich dem Zentrum des äußeren Hüllkörpers x1 sein. Dies entspricht einer Verringerung der Rotation zwischen dem Ladungsträger und des autonomen Fahrzeugs.

Hierfür ist es unerlässlich zu erwähnen, dass die Werte, welche die Zentren der Hüllkörper widerspiegeln, im Bereich -1 bis 1 normalisiert sind. Dadurch wird es ermöglicht die entwickelte Methode (ONN) mit verschiedenen Sensorsystemen und dementsprechend auch unterschiedlichen Sensorauflösungen zu verwenden.

Zusätzlich zu den oben aufgeführten Optimierungskriterien können in zukünftigen Anwendungen neue Kriterien ergänzt werden, um das Fahrverhalten an vorgegebene Umweltbedingungen anzupassen.

Die vorgeschlagene verdichtete visuelle Information wird in Figur 3 als Hüllkörper (Bounding Boxes) 312, 313 für den Ladungsträger 311 (in diesem Fall: Palette) dargestellt. Ein Begrenzungsrahmen / Hüllkörper 312 zeigt den erkannten Ladungsträger 311 selbst an, während der zweite Hüllkörper 313 (Bounding Box) die Aufnahmelöcher des Ladungsträgers 311 anzeigt. Im Hintergrund sind weitere Ladungsträger 310 erkennbar, die vom System aber ignoriert werden. Anhand der Position und Größe dieser Hüllkörper, dargestellt in nur 2 mal 3 skalaren Werten für die Hüllkörper und
2 Größen für das Fahrzeug (Richtung & Geschwindigkeit):
Für jeden Hüllkörper werden jeweils folgende drei Werte ermittelt:
x und y definieren die Position des Zentrums des Hüllkörpers, und
f ist die Fläche des Hüllkörpers.
x1, y1, f1 Position des ersten Hüllkörpers, (Zentrum, Fläche)
x2, y2, f2 Position des zweiten Hüllkörpers, (Zentrum, Fläche)
x3, Richtung des autonomen Fahrzeugs, und
x4, Geschwindigkeit des autonomen Fahrzeugs.

Der Input für den Kontroller über Fahrzeug-Geschwindigkeit und -Richtung wird in dem vorgeschlagenen Verfahren von beispielsweise 150.582 Werten (224x224x3 Pixel) auf 6 Werte zur weiteren Verarbeitung verdichtet.

So ist das Verfahren in der Lage, das Fahrzeug so zu steuern, dass es die Gabeln in die Aufnahmelöcher des Ladungsträgers einführt. Es ist wichtig zu beachten, dass das Erkennungsergebnis durch verschiedene Erkennungsmethoden wie Objekterkennung, semantische Segmentierung, Template Matching, Markierungserkennung (Marker Detection) usw. generiert werden kann und die vorgeschlagene Methode unabhängig davon ist.

Die Visualisierung von verdichteten visuellen Informationen (hervorgehobenen Hüllkörper Bounding Boxes) des Ladungsträgers (in dem ausgeführten Fall der Palette) ist bei der Auswertung und Steuerung ebenfalls vorteilhaft, so kann ggf. eine Nachkorrektur des Verfahrens (bspw. durch Nachsteuerung der Belohnungsfunktion) erfolgen.

Der Informationsfluss der, auf maschinellem Lernen basierenden Regelung ist in der Figur 4 dargestellt
Die (RGB-) Kamera 401, der Detektor 402, die Steuereinheit des Fahrzeugs 405 sowie das Fahrzeug selbst (ohne Einschränkung der verwendeten Kinematiken 407) durch verschiedene Versionen davon ersetzt werden. Der optische Sensor 401 nimmt ein Bild auf, welches dann vom Detektor gemäß der oben beschriebenen Vorgaben analysiert wird. Vom Detektor werden die genannten ersten ermittelten 6 skalaren Werte der beiden Hüllkörper sowie die beiden skalaren Werte des autonomen Fahrzeugs (Richtung, Geschwindigkeit) 403 an die Steuerung übermittelt. Der Detektoroutput (6 Werte) wird mit dem gemessenen Geschwindigkeitsvekotr (2 Werte) konkateniert und dem Controller als Input zur Verfügung gestellt.

Ein neuer Input wird dann für den Kontroller erstellt. Dieser besteht aus Geschwindigkeit, Richtung und den 6 skalaren Werten der Bounding Boxen. Basierend auf diesen Informationen entscheidet der Kontroller dann welche Geschwindigkeit und Richtung (406) gefahren werden muss um das Ziel zu erreichen. 404 gibt die aktuelle Geschwindigkeit und Richtung an. Es wird dann entweder die Bewegung des autonomen Fahrzeugs beibehalten, oder (bei Verschlechterung der Werte) die Navigation entsprechend angepasst und die letzten beiden skalaren Werte (Richtung und Geschwindigkeit des Fahrzeugs) entsprechend verändert.

Die Methode kann so zum Anfahren und Aufnehmen aller bspw. palettenartigen Ladungsträger eingesetzt werden.

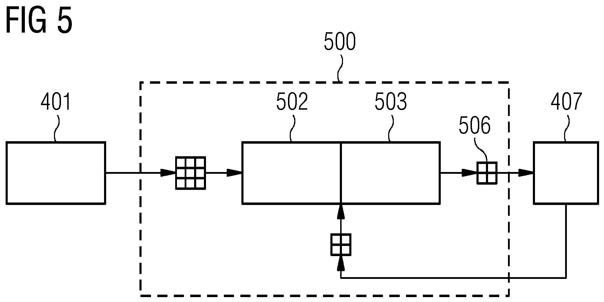

Anstatt die Lage des Ladungsträgers zu schätzen (siehe beispielsweise in der Figur 5 durch den Sensor 401 allein) und anschließend eine Regelung durchzuführen, verwenden wir eine auf maschinellem Lernen basierende Fahrzeugsteuerung, die nur verdichtete visuelle Informationen erhält. Daher benötigen wir keine kostenintensiven Sensorsysteme wie LiDAR-Sensoren und sind nicht auf teilweise ungenaue Tiefenmessungen oder Schätzungen angewiesen.

Aufgrund der komprimierten visuellen Informationen und der dadurch reduzierten Netzwerkgröße ist die vorgeschlagene Lösung auf IPCs mit geringer Rechenleistung oder auf eingebetteten Systemen lauffähig.

Durch die Agnostik zum Detektor kann die Methode mit verschiedenen (verfügbaren) Detektionsmethoden verwendet werden. Auch das Training eines Objektdetektors ist wesentlich einfacher als bei den typischerweise verwendeten Pose Estimation Networks aufgrund der einfachen Repräsentation des gewünschten Detektionsergebnisses. Ein Beispiel für den Stand der Technik wäre in der Figur 5 angegeben, der Objektdetektor 502 ist hier dem Maschinellen Lernen 503 direkt vorgelagert.

Aufgrund der Architektur der Methode können wir palettenartige Ladungsträger von beliebigen Positionen anfahren, die nicht vordefiniert sein müssen. Dies ist besonders vorteilhaft in einem Lager, in dem die autonomen Fahrzeuge AGVs und Menschen Seite an Seite arbeiten.

Die Lösung kann leicht an neue Arten von Ladungsträgern angepasst werden, mit weniger oder gar keinem Aufwand für Anpassung der auf maschinellem Lernen basierenden Fahrzeugsteuerung. Eine Anpassung des Detektors ist ausreichend.

## Patentansprüche

1. Computerimplementiertes Verfahren zum Steuern eines autonomen Fahrzeugs (300) zu einem Zielobjekt (311), mit folgenden Schritten
a. Erkennen eines Zielobjekt (311) mit einem optischen Sensor (401),
b. Ermitteln eines ersten Hüllkörpers (312) zu dem Zielobjekt (311), (402)
c. Ermitteln erster Koordinaten x1, y1, f für den ersten Hüllköper (312),
d. Ermitteln eines zweiten Hüllkörpers (313) zu dem Zielobjekt (311),
e. Ermitteln zweiter Koordinaten x2, y2, f2 für den zweiten Hüllkörper
f. Ermitteln dritter Koordinaten x3, Richtung und x4, Geschwindigkeit des autonomen Fahrzeugs (300) angeben,
g. Berechnen von verdichteten visuellen Informationen aus den ersten, zweiten und dritten Koordinaten und
h. Steuerbefehlen für das autonome Fahrzeug (300) mit Hilfe eines Maschinenlernverfahrens (405),
i. Übermitteln der Steuerbefehle (406) an das autonome Fahrzeug (300),
j. Wiederhole Schritt a bis h, bis das Zielobjekt (300) erreicht ist.

2. Verfahren gemäß Patentanspruch 1,
**dadurch gekennzeichnet, dass**
das Zielobjekt (311) eine Trägervorrichtung zur Aufnahme und dem Transport von Waren ist.

3. Verfahren gemäß Patentanspruch 2,
**dadurch gekennzeichnet, dass**
der erste ermittelte Hüllkörper (312) den Umfang des Zielobjekts (311) umfasst, und
der zweite ermittelte Hüllkörper (313) den Umfang von im Zielobjekt (311) für den Transport vorgesehenen Mitteln umfasst.

4. Verfahren gemäß einem der vorherigen Patentansprüche, **dadurch gekennzeichnet, dass**
die Erfassung des Zielobjekts durch einen optischen Sensor (401) geschieht, der eine der folgenden Werte beinhaltet:
- 2D Bild, aufgenommen von einer mononuklearen Kamera,
- Infrarot Bild,
- Bild von einer RGB-Kamera,
- Bild von einer Graustufenkamera.

5. Verfahren gemäß einem der vorherigen Patentansprüche, **dadurch gekennzeichnet, dass**
das zum Berechnen von Steuerbefehlen für das autonome Fahrzeug verwendete Maschinenlernverfahren ein verstärkendes Lernverfahren, Reinforcement Learning ist, wobei sich die Höhe der Belohnung anhand der verdichteten visuellen Information errechnet wird.

6. Verfahren gemäß Patentanspruch 5,
**dadurch gekennzeichnet, dass**
das verstärkende Lernverfahren, Reinforcement Learning, während der Ausführung des Verfahrens nachtrainierbar ist.

7. Verfahren gemäß einem der vorherigen Patentansprüche, **dadurch gekennzeichnet, dass**
nach Erreichung des Zielobjekts (311) abschließend Schritt
k. Aufnahme des Zielobjekts an den zum Transport vorgesehenen Mitteln
durchgeführt wird.

8. Verfahren gemäß einem der vorherigen Patentansprüche, **dadurch gekennzeichnet, dass**
zumindest zwei Zielobjekte (310) erkannt wurden und
jedes Zielobjekt durch zumindest ein weiteres Merkmal gekennzeichnet sind, und durch geeigneten Filter erkannt werden können.

9. Computerprogrammprodukt, **dadurch gekennzeichnet, dass** es geeignet ist, die Schritte eines Verfahren gemäß eines der Patentansprüche 1 bis 8 durchzuführen.

10. Vorrichtung (400) zum Steuern eines autonomen Fahrzeugs (300) zu einem Zielobjekt (311), mit
- einem optischen Sensor (401) zum Erkennen eines Zielobjekts (311),
- einem Detektor (402) zum Ermitteln eines ersten Hüllkörpers (312) zu dem Zielobjekt (311),
- und zum Ermitteln erster Koordinaten x1, y1, f1 für den ersten Hüllköper (312),
- und zum Ermitteln eines zweiten Hüllkörpers (313) zu dem Zielobjekt (311),
- und zum Ermitteln zweiter Koordinaten x2, y2, f2 für den zweiten Hüllkörper
- und eine Steuerung zum Empfangen dritter Koordinaten x3, Richtung und x4, Geschwindigkeit des autonomen Fahrzeugs (300), und
einer Steuerung (405) zum Berechnen von Steuerbefehlen für das autonome Fahrzeug (300) mit Hilfe eines Maschinenlernverfahrens, wobei
nach Übermitteln der Steuerbefehle (406) an das autonome Fahrzeug (300),
das Fahrzeug die dritten Koordinaten x5, x6 neu ermittelt und an die Steuerung übermittelt, bis das Zielobjekt (300) erreicht ist.

11. Vorrichtung gemäß Patentanspruch 10,
**dadurch gekennzeichnet, dass**
das Zielobjekt (311) eine Trägervorrichtung zur Aufnahme und dem Transport von Waren ist.

12. Vorrichtung gemäß Patentanspruch 11,
**dadurch gekennzeichnet, dass**
der erste ermittelte Hüllkörper (312) den Umfang des Zielobjekts (311) umfasst, und
der zweite ermittelte Hüllkörper (313) den Umfang von im Zielobjekt (311) für den Transport vorgesehenen Mitteln umfasst.

13. Vorrichtung gemäß einem der vorherigen Patentansprüche 10 bis 12,
**dadurch gekennzeichnet, dass**
der optische Sensor (401) zur Erfassung des Zielobjekts durch einen Sensor geschieht, der eine der folgenden Daten erfasst:
- 2D Bild, aufgenommen von einer monokulare Kamera,
- Infrarot Bild,
- Bild von einer RGB-Kamera,
- Bild von einer Graustufenkamera.

14. Vorrichtung gemäß einem der vorherigen Patentansprüche 10 bis 13,
**dadurch gekennzeichnet, dass**
die Steuerung (405) zum Berechnen von Steuerbefehlen für das autonome Fahrzeug (300) als Maschinenlernverfahren ein verstärkendes Lernverfahren, Reinforcement Learning verwendet, wobei sich die Höhe der Belohnung anhand einer verdichteten visuellen Information errechnet.

15. Vorrichtung gemäß Patentanspruch 14,
**dadurch gekennzeichnet, dass**
das verstärkende Lernverfahren, Reinforcement Learning, während der Ausführung des Verfahrens nachtrainierbar ist.

16. Vorrichtung gemäß einem der vorherigen Patentansprüche 10 bis 15,
**dadurch gekennzeichnet, dass**
das autonome Fahrzeug (300) nach Erreichen des Zielobjekts (311) abschließend die Aufnahme des Zielobjekts an den zum Transport vorgesehenen Mitteln durchführt.

17. Verfahren gemäß einem der vorherigen Patentansprüche 10 bis 16,
**dadurch gekennzeichnet, dass**
ein geeigneter Filter vorgesehen ist, welcher bei zumindest zwei geeigneten Zielobjekten (310) ein zumindest weiteres Merkmal erkennbar macht.
